# EUROPÄISCHE PATENTANMELDUNG

(11) **EP 4 026 761 A1**
(43) Veröffentlichungstag der Anmeldung: **13.07.2022**
(21) Anmeldenummer: 22160508.2
(22) Anmeldetag: 13.08.2020
(51) Int. Cl.: B62J 1/16, B62J 27/30, B62K 7/02, B62J 1/28

(54) **LASTENFAHRRADBEHÄLTER**

(30) Priorität: 02.09.2019 DE 202019104808 U; 28.02.2020 DE 202020101110 U
(62) Teilanmeldung aus: 20190898.5
(71) Anmelder: RTI Sports GmbH, 56070 Koblenz (DE)
(72) Erfinder: Rasche, Johannes, 64285 Darmstadt (DE); Graeve, Arndt, 56072 Koblenz (DE)
(74) Vertreter: dompatent von Kreisler Selting Werner - Partnerschaft von Patent- und Rechtsanwälten mbB

(57) **Zusammenfassung**

Ein Lastenfahrradbehälter zum Transport von Personen weist mindestens ein innerhalb des Lastenfahrradbehälters angeordnetes Sitzelement (104) auf. Das Sitzelement (104) ist über eine Halteeinrichtung (78,80,82) befestigt. Zur guten Kraftübertragung sind die Halteeinrichtungen in bevorzugter Ausführungsform als ein umlaufender Verbindungsbügel (78) und Verbindungsstreben (80,82) ausgebildet.

## Beschreibung

Die Erfindung betrifft einen Lastenfahrradbehälter, insbesondere zum Transport von Personen.

Lastenfahrräder, die zum Transport von Personen, insbesondere Kindern, geeignet sind, weisen einen entsprechenden Lastenfahrradbehälter auf. Diese sind häufig aus Kunststoffmaterial, Holz o.dgl. hergestellt. Insbesondere zum Transport von Kindern ist es bekannt, innerhalb der Lastenfahrradbehälter Sitze anzuordnen. Die Befestigung der Sitze ist häufig unzureichend, so dass insbesondere bei Unfällen beispielsweise ein Lösen der Sitze im Lastenfahrradbehälter erfolgen kann.

Aufgabe der Erfindung ist es, einen Lastenfahrradbehälter zum Transport von Personen zu schaffen, mit dem die Sicherheit verbessert ist.

Die Lösung der Aufgabe erfolgt erfindungsgemäß durch einen Lastenfahrradbehälter mit den Merkmalen des Anspruchs 1.

Der Lastenfahrradbehälter weist in bevorzugter Ausführungsform ein Bodenelement, zwei einander gegenüberliegende Seitenwände, eine Rückwand und eine Vorderwand auf. Vorzugsweise ist der Lastenfahrradbehälter aus einem Kunststoffmaterial hergestellt und insbesondere aus zwei oder mehreren Kunststoffteilen zusammengesetzt. Innerhalb des Lastenfahrradbehälters ist mindestens ein Sitzelement angeordnet. Hierbei kann das Sitzelement insbesondere ein Sitzteil und ein Rückenteil aufweisen. Des Weiteren ist zur Befestigung des Sitzelements in dem Lastenfahrradbehälter eine Halteeinrichtung vorgesehen. Erfindungsgemäß ist die Halteeinrichtung derart ausgebildet, dass sie mindestens ein Halteelement aufweist, das zur insbesondere hohen Kraftaufnahme geeignet ist. Insbesondere weist das mindestens eine Halteelement Metall auf und ist insbesondere aus Metall hergestellt. Bereits durch eine derartige Ausgestaltung der Halteeinrichtung kann eine gute Kraftaufnahme und Kraftübertragung erfolgen. Hierdurch ist das Risiko, dass sich das Sitzelement im Falle eines Unfalls löst, verringert.

Um die Sicherheit weiter zu erhöhen, ist es besonders bevorzugt, dass das mindestens eine Halteelement einen Verbindungsbügel aufweist. Dieser Verbindungsbügel ist vorzugsweise umlaufend um den Lastenfahrradbehälter und stellt insofern eine Art Klammer dar. Insbesondere ist ein derartiger Verbindungsbügel aus Metall hergestellte oder weist Metall auf, so dass es sich um ein sehr stabiles Element handelt. Durch die klammer- oder rahmenförmige Ausgestaltung eines derartigen Verbindungsbügels kann eine hohe Steifigkeit und Stabilität erzielt werden, Erfindungsgemäß ist es daher besonders bevorzugt, dass das mindestens eine Sitzelement an diesem Verbindungsbügel mittelbar oder unmittelbar befestigt ist. Bei einem Unfall auftretende Kräfte, die beispielsweise durch einen Gurt auf das Sitzelement übertragen werden, werden somit im Wesentlichen in den Verbindungsbügel und nicht in den Lastenfahrradbehälter selbst eingeleitet. Dies hat den Vorteil, dass die Krafteinleitung nicht in einem vorzugsweise aus Kunststoff hergestellten Bauteil, nämlich im Lastenfahrradbehälter, sondern in einem deutlich stabileren Bauteil, nämlich dem insbesondere aus Metall hergestellten Verbindungsbügel, eingeleitet wird. In besonders bevorzugter Ausführungsform der Erfindung ist der Verbindungsbügel zumindest teilweise von dem insbesondere aus Kunststoffmaterial hergestellten Lastenaufnahmebehälter umgeben. Bevorzugt ist es, dass nur die Aufnahmestellen, an denen Sitzelemente oder Sicherheitsgurte befestigt werden können, nicht von Kunststoff umgeben sind.

Der Verbindungsbügel, der insbesondere in einem oberen Bereich des Lastenfahrradbehälters angeordnet ist, ist in bevorzugter Ausführungsform auf Höhe der Schultern mit dem mindestens einen Sitzelement, insbesondere einem Rückenteil des Sitzelements, verbunden. Die Verbindung kann hierbei über Ösen oder rohrförmig ausgebildete Verbindungselemente erfolgen, in die der Verbindungsbügel eingesteckt ist.

Des Weiteren ist es bevorzugt, dass zusätzlich oder anstelle der Verbindungsbügel mindestens eine Verbindungsstrebe vorgesehen ist. Bevorzugt ist es, dass eine derartige Verbindungsstrebe in einem unteren Bereich, d.h. insbesondere auf Höhe eines Sitzteils des Sitzelements, angeordnet ist. Vorzugsweise erstrecken sich die Streben zwischen den beiden Seitenwänden des Fahrradbehälters und sind fest mit den beiden Seitenwänden verbunden. Die Verbindung des Sitzelements mit den Verbindungsstreben erfolgt vorzugsweise wiederum mittelbar oder unmittelbar. Bevorzugt ist hierbei wiederum das Vorsehen von Ösen oder rohrförmigen Elementen, durch die die Streben hindurchgeführt sind. Insbesondere wenn in einem vorderen und einem hinteren Bereich des Lastenfahrradbehälters jeweils mindestens ein Sitzelement angeordnet ist, ist es bevorzugt, dass sowohl im vorderen Bereich, d.h. nahe der Vorderwand, als auch im hinteren Bereich, d.h. nahe der Rückwand, eine Verbindungsstrebe angeordnet ist.

In besonders bevorzugter Ausführungsform weist die Halteeinrichtung somit einen insbesondere umlaufenden Verbindungsbügel und ein oder zwei Verbindungsstreben auf. Es ist insofern bevorzugt, dass jedes Sitzelement mit einer Verbindungsstrebe und dem Verbindungsbügel verbunden ist. Die Kraftaufnahme erfolgt somit in bevorzugter Ausführungsform einerseits im Bereich der Schulter, andererseits im Bereich des Sitzteils des Sitzelements.

In bevorzugter Weiterbildung der Erfindung weist das Sitzelement jeweils ein Sitzteil und ein Rückenteil auf. Hierbei ist es bevorzugt, dass das Sitzteil klappbar ist. Dies hat den Vorteil, dass bei hochgeklapptem Sitzteil der erste Fahrradbehälter auch zum Transport von anderen Lasten genutzt werden kann, ohne dass die Sitzelemente ausgebaut werden müssen. Bevorzugt ist es hierbei, dass das Klappen des Sitzteils über die Verbindungselemente erfolgt, mit denen das Sitzelement bzw. das Sitzteil an der Verbindungsstrebe befestigt ist. Die vorzugsweise als Ösen oder Rohrteile ausgebildeten Verbindungselemente haben somit einerseits die Funktion einer festen Verbindung zwischen dem Sitzelement und den Verbindungsstreben und übernehmen andererseits die Zusatzfunktion der Klappbarkeit.

Vorzugsweise sind mit dem Sitzelement Befestigungselemente zur Verbindung mit den insbesondere im Lastenfahrradbehälter integrierten Halteelementen vorgesehen. Vorzugsweise sind die Befestigungselemente mit dem Rückenteil des Sitzelementes verbunden. Besonders bevorzugt ist es, dass mindestens ein oberes Befestigungselement und mindestens ein unteres Befestigungselement vorgesehen ist. Das obere Befestigungselement dient insbesondere zum festen Verbinden mit dem Halteelement, insbesondere den Verbindungsbügeln. Die Fixierung kann hierbei über eine feste Verbindung mittels Schrauben o.dgl. erfolgen.

Das untere Befestigungselement ist vorzugsweise derart ausgebildet, dass es eine im montierten Zustand nach unten weisende Öffnung aufweist bzw. einen U-förmigen Querschnitt aufweist. Durch ein derartig ausgebildetes unteres Befestigungselement ist es möglich, dieses von oben auf ein Halteelement, insbesondere die Verbindungsstrebe, aufzustecken. Durch das untere Befestigungselement können auftretende horizontale Kräfte aufgenommen bzw. an die Verbindungsstrebe oder ein anderes entsprechendes Halteelement übertragen werden. In Verbindung mit den oberen Befestigungselementen, die eine feste Verbindung zu den Halteelementen, insbesondere den Verbindungsbügeln, realisieren, ist das Sitzelement auf einfache Weise in dem Lastenfahrradbehälter fixierbar. Es ist hierzu lediglich erforderlich, das Sitzelement mit dem unteren Befestigungselement insbesondere auf die Verbindungsstrebe aufzustecken und die beiden oberen Befestigungselemente, die insbesondere Schrauben aufweisen, zu fixieren.

Des Weiteren ist es bevorzugt, dass das Sitzelement ein Kopfteil aufweist. Dieses Kopfteil, das insbesondere eine Kopfstütze umfasst, ist vorzugsweise justierbar und insbesondere höhenverstellbar. Des Weiteren ist es bevorzugt, dass das Kopfteil klappbar ist. Das Klappen kann hierbei wiederum über hülsen- oder rohrförmige Elemente erfolgen, die schwenkbar mit dem Verbindungsbügel verbunden ist. Vorzugsweise ist die Größe der klappbaren Elemente, d.h. der Kopfstütze und des Sitzteils, derart ausgeführt, dass in eingeklapptem Zustand das Kopfteil vor dem Sitzteil angeordnet ist bzw. sich Kopfteil und Sitzteil teilweise überdecken. Insbesondere wenn das Kopfteil das Sitzteil überdeckt, besteht die vorteilhafte Ausgestaltung, dass auf einfache Weise das Kopfteil hochgeklappt werden kann und das Sitzteil automatisch in die Sitzposition, d.h. nach unten klappt bzw. herunterfällt.

In einer bevorzugten Weiterbildung der Erfindung ist ferner insbesondere je Sitzelement ein Sitzgurt vorgesehen. Bevorzugt ist es hierbei, dass der Sitzgurt nicht oder nicht nur mit dem Sitzelement verbunden ist, sondern zumindest mit einem der Halteelemente verbunden ist. Zur guten Kraftübertragung ist es besonders bevorzugt, dass der Sicherheitsgurt sowohl mit dem Verbindungsbügel als auch mit einer Verbindungsstrebe verbunden ist.

In einer besonders bevorzugten Weiterbildung der Erfindung ist der Lastenfahrradbehälter aus mehreren Teilen, insbesondere zwei Kunststoffteilen, hergestellt. Die Kunststoffteile sind vorzugsweise aus einem Partikelschaum oder durch Kunststoffspritzgießen hergestellt. Die Kunststoffteile weisen in einer besonders bevorzugten Ausführungsform Partikelschaum auf und sind insbesondere aus Partikelschaum hergestellt. Insbesondere handelt es sich um thermoplastische Partikelschäume. Geeignet ist beispielsweise EPP (expandierbares Polypropylen). Alternativ können zumindest einzelne Teile des Lastenfahrradbehälters auch als Kunststoff-Spritzgussteile hergestellt sein.

Diese Kunststoffteile werden in besonders bevorzugter Weiterbildung durch Verbindungselemente, insbesondere einen Verbindungsbügel und ein oder zwei Verbindungsstreben, miteinander verbunden. Die Verbindungselemente weisen somit nicht nur die Funktion auf, die Sitzelemente zu fixieren und die Kräfte aufzunehmen, sondern weisen die zusätzliche Funktion auf, die Teile des Lastenfahrradbehälters miteinander zu verbinden.

Eine besonders bevorzugte Ausführungsform des Lastenfahrradbehälters weist daher ein Bodenelement, zwei einander gegenüberliegend Seitenwände, eine Rückwand und eine Vorderwand auf. Erfindungsgemäß ist der Lastenfahrradbehälter aus zumindest zwei Kunststoffteilen hergestellt. Ein erstes Kunststoffteil umfasst hierbei zumindest eine der Seitenwände und das zweite Kunststoffteil zumindest die zweite Seitenwand. Bei den übrigen Bauteilen, d.h. dem Bodenelement, der Rückwand und der Vorderwand, kann es sich jeweils um gesonderte Bauteile handeln. Besonders bevorzugt ist es, dass zumindest eines der Kunststoffteile, insbesondere zwei Kunststoffteile, jeweils zusätzlich zu einer der beiden Seitenwände zumindest einen Teil des Bodenelements und/oder einen Teil der Rückwand und/oder einen Teil der Vorderwand umfasst. Insbesondere sind diese beiden Kunststoffteile derart ausgebildet, dass eine vertikale Teilung realisiert ist. Unter vertikaler Teilung ist im montierten Zustand zu verstehen, dass die Trennebene zwischen den Kunststoffteilen im Wesentlichen vertikal verläuft, wobei mehrere Trennebenen vorgesehen sein können, wenn der Fahrradtransportbehälter aus mehreren Kunststoffteilen besteht und/oder die Trennebene aus mehreren zueinander versetzen vertikalen Trennebenen-Bereichen aufgebaut sein kann.

Besonders bevorzugt ist es, dass der Lastenfahrradbehälter im Wesentlichen aus nur zwei Kunststoffteilen, d.h. insbesondere zwei Hälften, besteht. Zumindest eine der beiden Hälften umfasst neben einer Seitenwand zumindest Teile des Bodenelements, der Rückwand und der Vorderwand, wobei das zweite Kunststoffteil eine Seitenwand umfasst oder ebenfalls eine Seitenwand und jeweils zumindest einen Teil des Bodenelements und/oder der Rückwand und/oder der Vorderwand umfasst. Hierbei ist es besonders bevorzugt, dass beide Kunststoffteile zusätzlich zu einer Seitenwand jeweils einen Teil des Bodenelements und einen Teil der Rückwand und einen Teil der Vorderwand mitumfassen. Insbesondere ist es bevorzugt, dass die beiden als Hälften ausgebildeten Kunststoffteile jeweils die Hälfte des Bodenelements, der Rückwand und der Vorderwand mit umfassen. Die Trennebene zwischen den beiden als Hälften ausgebildeten Kunststoffteilen verläuft somit in montiertem Zustand als vertikale Mittelebene.

Insbesondere ist es bevorzugt, dass die beiden Kunststoffteile nicht nur als Hälften ausgebildet sind, sondern spiegelbildlich bzw. spiegelsymmetrisch zu dieser vertikalen Trennebene ausgebildet sind, wobei die vertikale Trennebene hierbei die Ebene zwischen den beiden Hälften darstellt und keine Formtrennebene einer zweiteiligen Kunststoffform ausbildet. Derartige Formtrennebenen sind zusätzlich vorgesehen, da die einzelnen Kunststoffteile entformt werden müssen.

Die vorstehend beschriebene bevorzugte Ausgestaltung der einzelnen Teile, insbesondere der Hälften der Kunststoff-Fahrradbox aus Kunststoffteilen, weist insbesondere den Vorteil auf, dass die einzelnen Teile leicht entformbar sind. Die erforderliche Form ist erheblich kleiner gegenüber einer Form, mit der der gesamte Lastenfahrradbehälter aus einem Kunststoffteil hergestellt würde.

Ferner weist die erfindungsgemäße Ausgestaltung des Lastenfahrradbehälters aus mehreren Teilen, insbesondere zwei Hälften mit vertikaler Trennebene, den Vorteil auf, dass in den einzelnen Teilen Ausnehmungen, Vertiefungen u.dgl. auf einfache Weise vorgesehen werden können, ohne dass die Form zur Herstellung des Kunststoffteils aufwändige Schieber, verlorene Kerne o.dgl. zur Erzeugung von Hinterschnitten aufweisen muss.

Besonders bevorzugt ist es, dass eine Entformungsrichtung der Kunststoffteile, insbesondere der beiden Hälften, senkrecht zur jeweiligen Seitenwand und/oder parallel zur Vorderwand bzw. Rückwand bzw. dem Bodenelement verläuft. Hierdurch ist es möglich, das Kunststoffteil auf einfache Weise zu entformen oder insbesondere keine Hinterschnitte vorgesehen sind.

Vorzugsweise sind an Innenseiten der Seitenwände und/oder an Außenseiten der Seitenwände Versteifungsrippen vorgesehen. Bei der bevorzugten Entformungsrichtung und auf Grund des Ausgestaltens des Lastenfahrradbehälters aus insbesondere zwei vertikal geteilten Hälften, können derartige Versteigungsrippen o.dgl. vorgesehen werden, ohne dass hierbei Hinterschnitte auftreten. Durch das Vorsehen derartiger Versteifungsrippen kann die Steifigkeit verbessert werden bzw. hierdurch Material und Gewicht eingespart werden. Die versteifungsrippen können hierbei auch derart ausgebildet sein, dass hierdurch beispielsweise Armauflagen, Halteelemente für Anbauteile, wie Trinkflaschen, Aufbewahrungsfächer u.dgl. ausgebildet sind.

Zusätzlich zu den Versteifungsrippen können in Entformungsrichtung offene Ausnehmungen an der Innenseite und/oder der Außenseite der Seitenwände, aber auch an der Vorderwand oder der Rückwand, auf einfache Weise ausgebildet sein. Auch im Bodenelement können derartige in Entformungsrichtung offene Ausnehmungen vorgesehen sein. Diese können auch an einer Innenseite des Bodenelements offen ausgebildet sein, so dass das Bodenelement Rillen oder Rippen aufweist. Diese dienen einerseits zur Versteifung und können andererseits dazu dienen, dass das Bodenelement an der Innenseite nicht glatt ist, so dass transportierte Güter nicht verrutschen.

Die Verbindung der Kunststoffteile, insbesondere der beiden Hälften des Lastenfahrradbehälters, erfolgt in besonders bevorzugter Ausführungsform über Verbindungselemente. Die Verbindungselemente sind vorzugsweise zumindest teilweise aus Metall ausgebildet. Vorzugsweise ist ein insbesondere im oberen Bereich des Lastenfahrradbehälters angeordneter Verbindungsbügel vorgesehen. Hierbei ist es bevorzugt, dass dieser Verbindungsbügel als eine Art Klammer den Lastenfahrradbehälter vollständig umschließt bzw. umgreift. Der Verbindungsbügel kann auch innerhalb des Lastenfahrradbehälters oder in Ausnehmungen oder Vertiefungen des Lastenfahrradbehälters angeordnet sein. Bevorzugt ist es, dass der Verbindungsbügel insbesondere in sich geschlossen ist und somit eine steife Rahmenkonstruktion ausbildet, die einerseits die Teile des Lastenfahrradbehälters zusammenhält und miteinander verbindet und andererseits eine Kraftaufnahme ermöglicht. Besonders bevorzugt ist daher, dass die Verbindung des Lastenfahrradbehälters mit dem Lastenfahrrad über die Verbindungselemente, und nicht über die Kunststoffteile erfolgt. Hierdurch kann eine zuverlässige Verbindung gewährleistet werden.

Vorzugsweise weist der Verbindungsbügel zwei Bügelelemente auf, die beispielsweise über Schrauben, Rastelemente o.dgl. miteinander verbunden sind. Die Verbindungsbügel sind vorzugsweise U-förmig ausgebildet und verlaufen an einer Seitenwand, wobei das Mittelteil des Bügels an einer Seitenwand verläuft und die beiden Ansätze im Bereich der Vorderwand und der Rückwand verlaufen. Die Verbindung der beiden Bügelelemente erfolgt im Bereich der Vorderwand und/oder der Rückwand, insbesondere in der Mitte dieser beiden Wände. Besonders bevorzugt ist es, dass die Verbindung im Bereich der Trennebene erfolgt.

Vorzugsweise sind die Bügel in einem oberen Bereich nahe einer Oberkante der Seitenwände der Rückwand und der Vorderwand angeordnet. Insbesondere beträgt der Abstand des Bügelelements zu der Oberkante weniger als 10 cm, insbesondere weniger als 5 cm. Des Weiteren ist es bevorzugt, dass der Verbindungsbügel in Ausnehmungen oder Öffnungen angeordnet ist, so dass dieser insbesondere gegenüber einer Außenseite des Lastenfahrradbehälters nicht vorsteht.

Des Weiteren ist es bevorzugt, dass mindestens ein, insbesondere zwei Verbindungsstreben zum Verbinden der einzelnen Kunststoffteile vorgesehen sind. Besonders bevorzugt ist es, dass zwei Verbindungsstreben vorgesehen sind, wobei eine Verbindungsstrebe durch eine Innenseite der Rückwand und die andere Verbindungsstrebe im Bereich einer Innenseite der Vorderwand angeordnet ist. Die beiden Verbindungsstreben können hierbei derart ausgebildet sein, dass diese zwischen den beiden einander gegenüberliegenden Seitenwänden angeordnet sind und in bzw. an den Seitenwänden fixiert sind. Bevorzugt ist es, dass die insbesondere zwei Verbindungsstreben an ihren Enden Ansätze aufweisen. Hierbei kann ein Ansatz als ein insbesondere fest mit der Strebe verbundener Kopf und der andere Ansatz als lösbarer Ansatz, z.B. als Mutter, ausgebildet sein. Insbesondere bei dieser Ausführungsform ist ein Verspannen der Strebe und somit der Kunststoff-Bauteile auf einfache Weise möglich. Die Ansätze sind hierbei vorzugsweise in nach außen offenen Vertiefungen der Seitenwände angeordnet. Diese Vertiefungen können mit einem Deckel verschlossen sein.

Insbesondere durch die Kombination eines umlaufenden Verbindungsbügels im oberen Bereich des Lastenfahrradbehälters und zwei Verbindungsstreben im unteren Bereich kann eine gute und stabile Verbindung des Lastenfahrradbehälters realisiert werden. Insbesondere kann auch die Krafteinleitung über die Verbindungselemente erfolgen, wobei es besonders bevorzugt ist, dass der Lastenfahrradbehälter mit dem Lastenfahrrad über die Verbindungselemente verbunden ist.

In einer besonders bevorzugten Ausführungsform weist der Lastenfahrradbehälter eine hohe Schulterlinie auf. Insofern sind die Seitenwände des Lastenfahrradbehälters derart ausgebildet, dass die Oberkante der Seitenwände des Lastenfahrradbehälters etwa auf Höhe der Schulter eines in dem Lastenfahrradbehälter sitzenden Kindes angeordnet ist. Insofern beträgt der Abstand zwischen der Oberseite einer Sitzfläche eines in dem Lastenfahrradbehälter angeordneten Sitzelements und der Oberkante der Seitenwand des Lastenfahrradbehälters mindestens 30 cm, insbesondere mindestens 35 cm und besonders bevorzugt mindestens 40 cm. Die Oberkante des Lastenfahrradbehälter kann in Fahrtrichtung fallend ausgebildet sein. Wenn sowohl im hinteren Bereich des Lastenfahrradbehälters, d.h. mit Blick in Fahrtrichtung, als auch im vorderen Bereich, d.h. mit Blick entgegen der Fahrtrichtung, Sitzelemente angeordnet sind, kann die Oberkante des Lastenfahrradbehälter hinten 5 cm bis 10 cm höher sein als vorne, jeweils im Bereich der Schulter. Die Schulterlinie weist vorzugsweise in beiden Bereichen mindestens 30 cm, insbesondere mindestens 35 cm auf.

In Ausnehmungen oder Öffnungen, die in einzelnen Teilen der Lastenfahrradbehälter vorgesehen sind, können Anbauteile angeordnet oder auf einfache Weise mit der Lastenfahrradbehälter verbunden werden. Beispielsweise kann in eine nach außen offene, insbesondere schlitzförmige Öffnung ein Trittelement eingesteckt werden. Hierdurch kann, insbesondere für Kinder, der Einstieg in den Lastenfahrradbehälter erleichtert werden.

Bei einer bevorzugten Weiterbildung des Lastenfahrradbehälters weist dieser eine Deckel auf, mit dem die Oberseite des Lastenfahrradbehälters vorzugsweise vollständig verschlossen werden kann. Hierbei ist es bevorzugt, dass der Deckel schwenkbar, ggf. über ein Zwischenelement, mit den Verbindungselementen, insbesondere dem im oberen Bereich angeordneten Verbindungsbügel, verbunden ist. Hierdurch werden die auftretenden Kräfte beim Öffnen und Schließen des Deckels wiederum im Wesentlichen nicht in die Kunststoffteile, sondern in die Verbindungselemente eingeleitet.

Bei einer weiteren bevorzugten Ausführungsform weist das Bodenelement eine Öffnung auf. Durch diese Öffnung ist es möglich, in montiertem Zustand einen Zugang zu einer unterhalb der Lastenfahrradbehälter angeordneten Batterie o.dgl. zu ermöglichen. Diese Öffnung ist vorzugsweise mit einem Deckel, insbesondere dicht verschlossen.

Ferner betrifft die Erfindung einen Lastenfahrrad-Rahmen mit einem Hinterbau zur Aufnahme eines Hinterrads, einem Gabelelement zur Aufnahme eines Vorderrads und einem Tragelement zur Aufnahme des Lastenfahrradbehälters zwischen einem Lenkerrohr und dem Gabelelement. Der Lastenfahrradbehälter ist hierbei wie vorstehend beschrieben insbesondere in bevorzugter Ausführungsform ausgebildet.

Nachfolgend wird die Erfindung anhand einer bevorzugten Ausführungsform unter Bezugnahme auf die anliegenden Zeichnungen näher erläutert.

Es zeigen:
- Fig. 1a: eine schematische Seitenansicht eines Lastenfahrrads mit einem erfindungsgemäß ausgebildeten Lastenfahrradbehälter,
- Fig. 1b: eine schematische perspektivische Seitenansicht eines Lastenfahrrads ohne Lastenfahrradbehälter,
- Fig. 2: eine perspektivische Seitenansicht einer ersten bevorzugten Ausführungsform des Lastenfahrradbehälters,
- Fig. 3: eine Seitenansicht einer der beiden Hälften des in Fig. 1 dargestellten Lastenfahrradbehälters,
- Fig. 4: eine Draufsicht eines Lastenfahrradbehälters mit integrierten Sitzen,

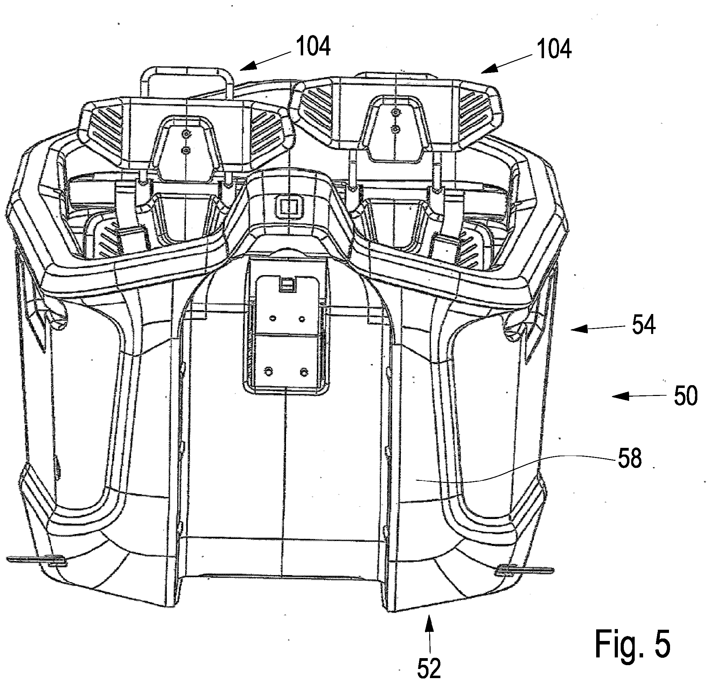

- Fig. 5: eine perspektivische Ansicht des Lastenfahrradbehälters von vorne, d.h. entgegen der Fahrtrichtung,
- Fig. 6: eine schematische perspektivische Ansicht einer ersten bevorzugten Ausführungsform eines Sitzelements und
- Fig. 7: eine schematische perspektivische Ansicht einer zweiten bevorzugten Ausführungsform eines Sitzelements.

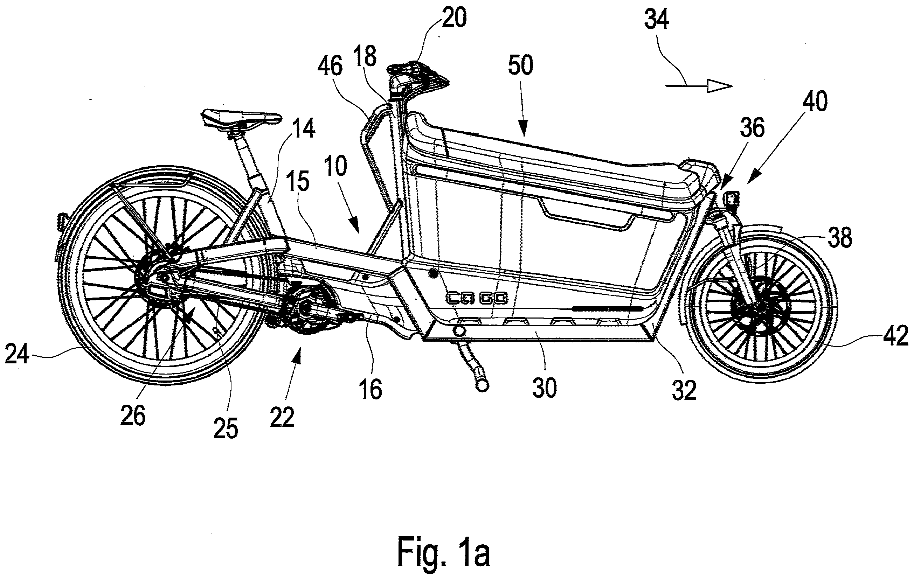

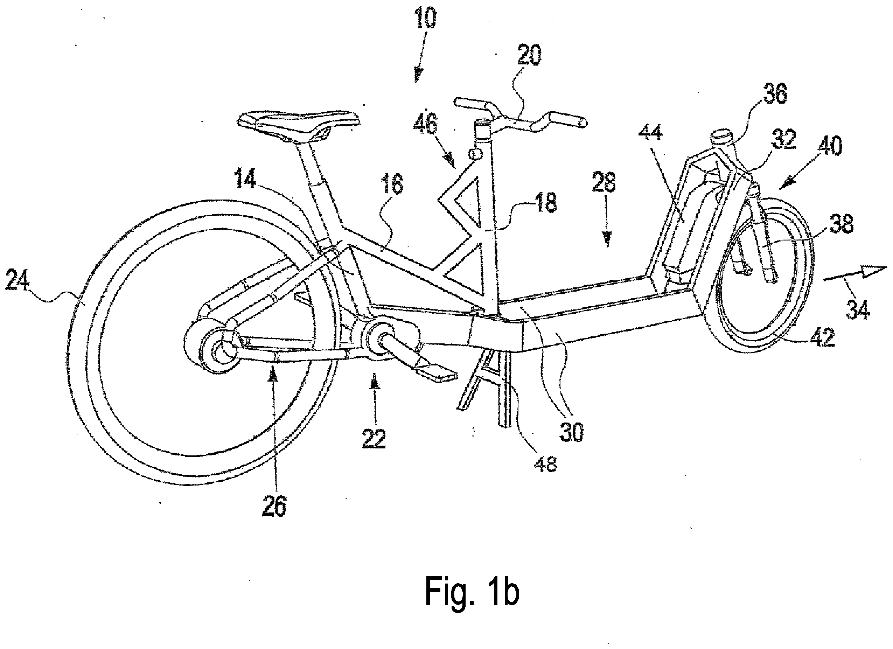

Eine bevorzugte Ausführungsform des erfindungsgemäßen Lastenfahrrads wie in Figur 1 dargestellt weist einen Lastenfahrrad-Rahmen 10 auf. Der Lastenfahrrad-Rahmen 10 weist im dargestellten Ausführungsbeispiel ein Sattelrohr 14, ein Oberrohr 15 und ein von einer Abdeckung verdecktes Unterrohr 16 sowie ein Lenkerrohr 18 auf. In dem Lenkerrohr 18 ist ein schwenkbares Rohr angeordnet, das mit einem Lenker 20 verbunden ist. Ferner ist zwischen dem Unterrohr 16 und dem Sattelrohr 14 im dargestellten Ausführungsbeispiel eine Antriebseinrichtung 22 angeordnet. Diese weist ein herkömmliches Tretlager auf, das mit einem Elektromotor verbunden ist, so dass das Treten von einem Elektromotor unterstützt werden kann. Der Antrieb eines Hinterrades 24 erfolgt über einen Antrieb mittels Zahnriemen 25 oder dergleichen. Ferner weist der Lastenfahrrad-Rahmen 10 einen Hinterbau 26 auf, der das Hinterrad 24 trägt. In dem dargestellten Ausführungsbeispiel ist ein einspuriges Lastenfahrrad dargestellt.

Ferner weist der Fahrradrahmen 10 ein Tragelement 28 auf. Das Tragelement 28 weist im dargestellten Ausführungsbeispiel zwei horizontale Rahmenelemente 30 (Fig. 1b) auf, die mit dem Unterrohr 16 sowie dem Lenkerrohr 18 verbunden sind. Mit den beiden horizontal verlaufenden Rahmenelementen 30 sind zwei im dargestellten Ausführungsbeispiel in Fahrtrichtung 34 steigend verlaufende Gabelelemente 32 angeordnet. Diese sind im Bereich eines Gabelschafts 36 miteinander und mit diesem verbunden. Der Gabelschaft 36 ist Teil eines ferner auch die Gabel 38 umfassenden Gabelelements 40, welches im dargestellten Ausführungsbeispiel ein Vorderrad 42 trägt.

Eine Batterie 44 kann mit dem Tragelement 28 verbunden sein. Im dargestellten Ausführungsbeispiel ist die Batterie 44 zwischen den beiden Gabelelementen 32 des Tragelements angeordnet. Ferner kann die Batterie 44 oder eine weitere Batterie zwischen den beiden Rahmenelementen 30 angeordnet sein.

Mit dem Lenkerrohr 18 ist ein Griffelement 46 verbunden. Im dargestellten Ausführungsbeispiel ist das Griffelement an einer Rückseite des Lenkerrohrs 18 angeordnet und weist in Richtung des Hinterbaus 26 bzw. in Richtung des Sattelrohrs 14. Das Griffelement 46 ist somit in der Rahmenmittelebene angeordnet, in der beim dargestellten Lastenfahrrad auch die beiden Räder sowie das Sattelrohr 14, das Unterrohr 16 und das Lenkerrohr 18 angeordnet sind.

Um das Lastenrad anzuheben oder beispielsweise auf einen Hauptständer 60 zu heben, kann der Nutzer insbesondere am oberen Teil 48 des Griffelements angreifen.

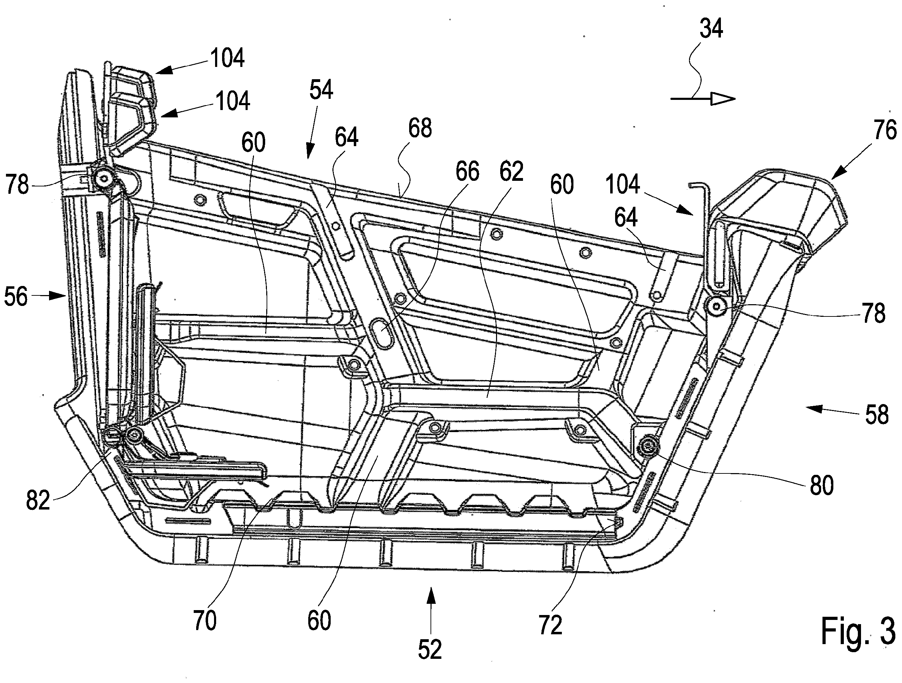

Ein Lastenfahrradbehälter 50 weist ein Bodenelement 52, zwei Seitenelemente 54, eine Rückwand 56 sowie eine Vorderwand 58 auf. In dem dargestellten besonders bevorzugten Ausführungsbeispiel ist der Lastenfahrradbehälter aus im Wesentlichen zwei Kunststoffteilen, wie in Fig. 3 dargestellt, ausgebildet. Die beiden Kunststoffteile sind zu einer vertikalen Mittelebene, die in montiertem Zustand der Fahrradmittelebene entspricht, spiegelbildlich ausgebildet. Jede der beiden Kunststoffhälften weist somit eine Seitenwand 54, eine halbe Rückwand 56, eine halbe Vorderwand 58 und eine halbes Bodenelement 52 auf.

Erfindungsgemäß ist die Entformungsrichtung senkrecht zur Seitenwand 54, d.h. senkrecht zur Zeichenebene der Fig. 3. Dies hat den wesentlichen Vorteil, dass es möglich ist, auf einfache Weise in Entformungsrichtung Versteifungsrippen 58 vorzusehen, wobei einzelne Versteifungsrippen 60,62 auch als Auflagen, beispielsweise Armauflagen, ausgebildet sein können. Die Rippen 58,60,62 erstrecken sich in Ausformrichtung, so dass keine Hinterschnitte entstehen. Ferner können beispielsweise in Rippen Ausnehmungen 64,66 vorgesehen sein, die nach innen bzw. in Ausformrichtung offen sind. Die schlitzförmigen Ausnehmungen 64 sind ferner an einer Oberseite 68 der Seitenwand 54 offen, so dass hierin beispielsweise Stangen eines Verdecks eingesteckt und justiert werden können. In der Ausnehmung 66 kann beispielsweise ein Flaschenhalter, eine Halterung für Transportgüter etc. angebracht werden.

In dem Bodenelement 52 sind im dargestellten Ausführungsbeispiel als Rillen ausgebildete Ausnehmungen 70 vorgesehen, die an einer Innenseite des Bodenelements 52 angeordnet sind und sich ebenfalls in Entformungsrichtung erstrecken. Hierdurch kann die Oberfläche des Bodenelements strukturiert werden und ebenfalls die Steifigkeit verbessert werden. Ferner ist im Bodenelement eine in Fig. 3 zur Hälfte sichtbare Öffnung 72 vorgesehen. Durch diese Öffnung ist es möglich, die in montiertem Zustand zwischen den beiden Rahmenelementen 30 des Fahrradrahmens 10 angeordnete Batterie beispielsweise zur Wartung oder zur Entnahme zugänglich zu machen. Die Öffnung 72 ist von einem Deckel 74 verschlossen.

Im vorderen oberen Endbereich der Vorderwand 58 ist ferner ein Ansatz 76 vorgesehen. Dieser verdeckt eine Oberseite des Gabelschafts. Der Ansatz 76 ragt in Fahrtrichtung über den oberen Bereich des Gabelelements und dient u.A. als Aufprallschutz.

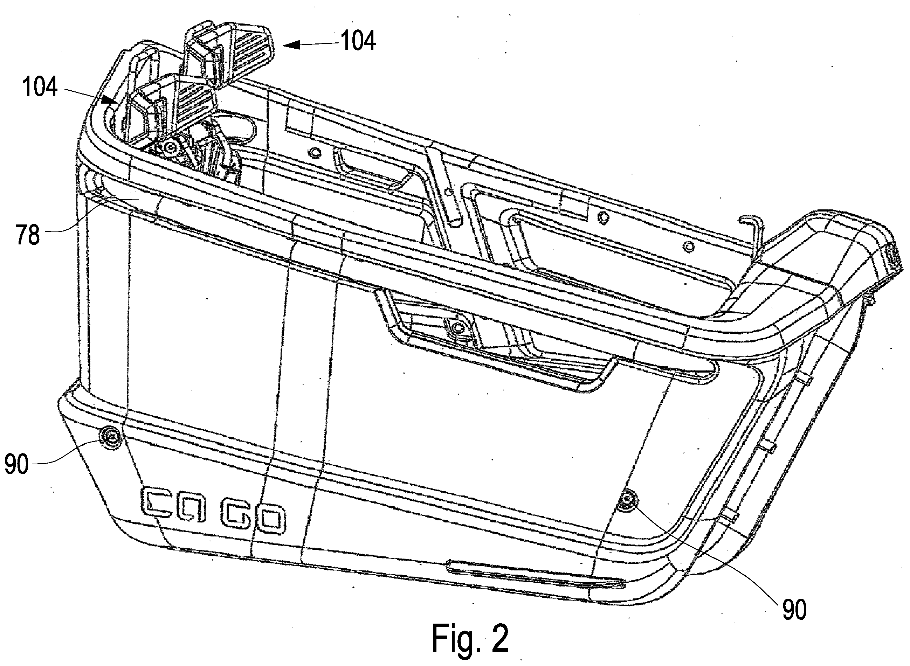

Die beiden in Fig. 3 dargestellten Hälften aus Kunststoff werden zu dem in Fig. 2 dargestellten Lastenfahrradbehälter zusammengesetzt. Zur Fixierung bzw. Verbindung der beiden Hälften ist in einem oberen Bereich ein aus zwei Bügelelementen 78 bestehender Verbindungsbügel vorgesehen. Die beiden Bügelelemente werden im Bereich der Trennebene mit entsprechenden Verbindungselementen verbunden. Die Trennebene ist die in Fig. 3 dargestellte Vorderseite der Hälfte der Rückwand 56 bzw. der Hälfte der Vorderwand 58 sowie der Hälfte des Bodenelements 52. Die beiden Bügelelemente 78 werden fest miteinander verbunden bzw. verspannt, so dass diese eine Klammer im oberen Bereich des Lastenfahrradbehälters ausbilden.

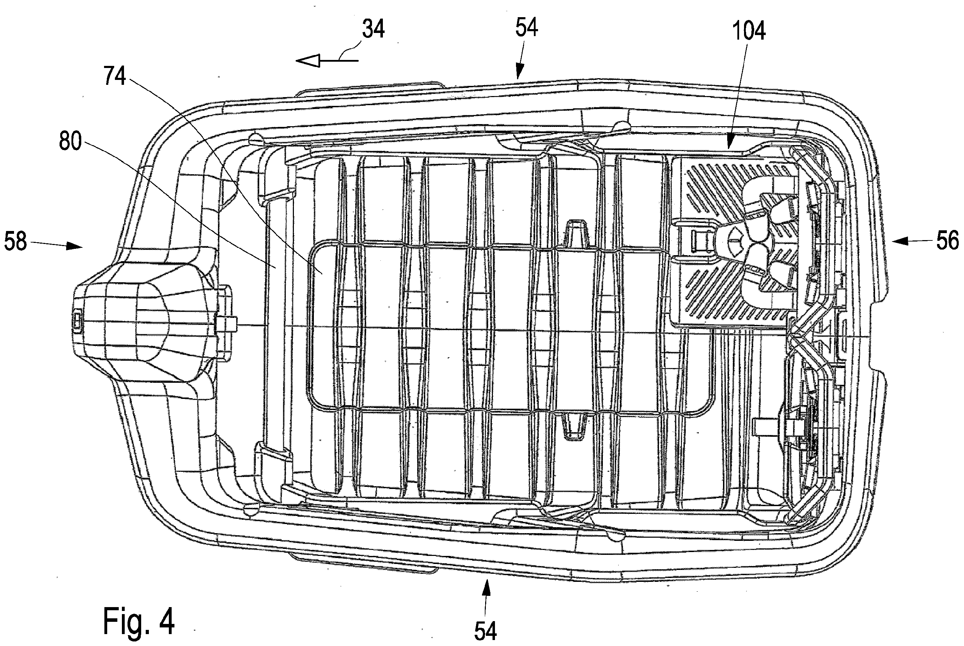

Zur Verbindung der beiden Hälften aus Kunststoff sind ferner zwei Verbindungsstreben 80,82 (Fig. 4) vorgesehen. Eine in Fahrtrichtung 34 hintere Verbindungsstrebe ist in einer Ausnehmung 84 (Fig. 3) angeordnet. Die Ausnehmung 84 ist in einem nach innen ragenden rippenförmigen Ansatz 86 vorgesehen. An der gegenüberliegenden Seite, d.h. in der weiteren Spritzgusshälfte, ist die Anordnung entsprechend. Die vordere Verbindungsstrebe 80 ist in einer Ausnehmung 88 (Fig. 3) angeordnet. Zum Verspannen der beiden Hälften des Lastenfahrradbehälters weisen die Verbindungsstreben 80,82 beispielsweise auf einer Seite einen als Kopf ausgebildeten Ansatz auf, wobei an der anderen Seite der Streben eine Mutter aufgeschraubt wird. Ebenso können beide Verbindungsstreben ein Innengewinde aufweisen, so dass die Fixierung von außen durch insbesondere als Schrauben ausgebildete Fixierelemente 90 (Fig. 2) erfolgen kann.

Innerhalb des Lastenfahrradbehälters 50 können nicht nur Lasten, sondern erfindungsgemäß Sitze 104 für Kinder vorgesehen werden. Anstelle eines in Fahrtrichtung 34 vorderen Sitzelements 104 kann auch ein Aufbewahrungsfach in den Behälter 50 eingesetzt werden. Der Aufbewahrungsbehälter 106 kann auf einfache Weise an der Innenseite des Behälters zwischen Aufnahmen justiert bzw. eingehängt werden.

Erfindungsgemäß sind in dem Lastenfahrradbehälter insbesondere mehrere, in der dargestellten Ausführungsform z.B. drei Sitzelemente 104 angeordnet. Die Sitzelemente 104 weisen, wie insbesondere in Fig. 4 ersichtlich ist, ein Rückenteil 108 und ein Sitzteil 110 auf. Ferner ist ein Kopfteil 112 vorgesehen. Das Sitzteil 110 weist Verbindungs- bzw. Befestigungselemente 114 auf. Diese weisen schlaufen- oder rohrförmige Enden auf, durch die die Verbindungsstreben 80,82 geführt sind. Hierdurch ist eine stabile, insbesondere für eine gute Kraftübertragung geeignete Verbindung zwischen den Sitzteilen 110 und den Verbindungsstreben 80,82 realisiert. Das Sitzteil 110 kann in Richtung eines Pfeils 116 um die Verbindungsstrebe 80,82 geklappt werden. Bei hochgeklapptem Sitz (Fig. 4) kann der Innenraum des Lastenfahrradbehälters zur Aufnahme von anderen Lasten genutzt werden.

Das Rückenteil 108 ist über, den Befestigungselementen 114 entsprechenden Befestigungselementen 118 an dem Verbindungsbügel 78 befestigt. Der Verbindungsbügel 78 verläuft wiederum durch die rohrförmigen Ansätze. Zusätzlich kann das Rückenteil 108 über entsprechende Verbindungselemente auch an den Verbindungsstreben 80,82 befestigt sein.

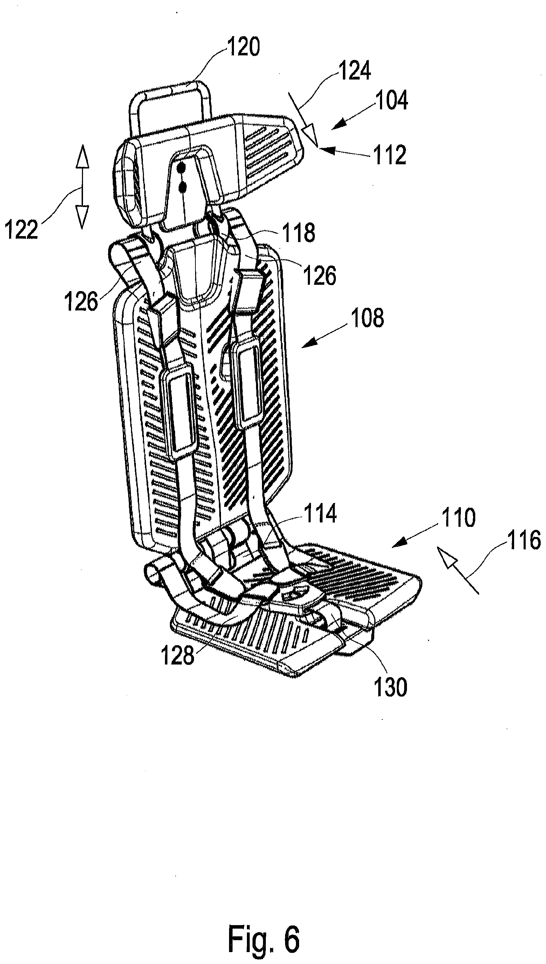

Das Kopfteil 112 weist einen Bügel 120 auf, der das Kopfteil 112 trägt. Das Kopfteil 112 ist an dem Bügel 120 in Richtung eines Pfeils 122 zur Höheneinstellung verschiebbar. Der Bügel weist an seinen in Fig. 6 nach unten weisenden Enden rohr- oder ringförmige Ansätze auf. Durch diese ist wiederum der Verbindungsbügel 78 geführt. Das Kopfteil 112 ist, wie durch einen Pfeil 124 angedeutet, um den Verbindungsbügel nach unten schwenkbar.

Des Weiteren ist in dem dargestellten Ausführungsbeispiel der Sitzelemente 104 ein Sicherheitsgurt vorgesehen. Hierbei handelt es sich um einen Sicherheitsgurt, der zwei Sicherheitsriemen 126 aufweist. Die Sicherheitsriemen 126 sind einerseits mit dem Verbindungsbügel 78 und andererseits mit den Verbindungsstreben 80,82 fest verbunden. Über eine Gurtschnalle 128 erfolgt ein Verbinden der beiden Sicherheitsriemen 126 und über einen weiteren Gurt 130 eine Verbindung mit dem Sitzteil 110. Durch eine derartige Anordnung des Sicherheitsgurtes ist eine Kraftübertragung auf den Verbindungsbügel 78 und die Verbindungsstreben 80,82 realisiert.

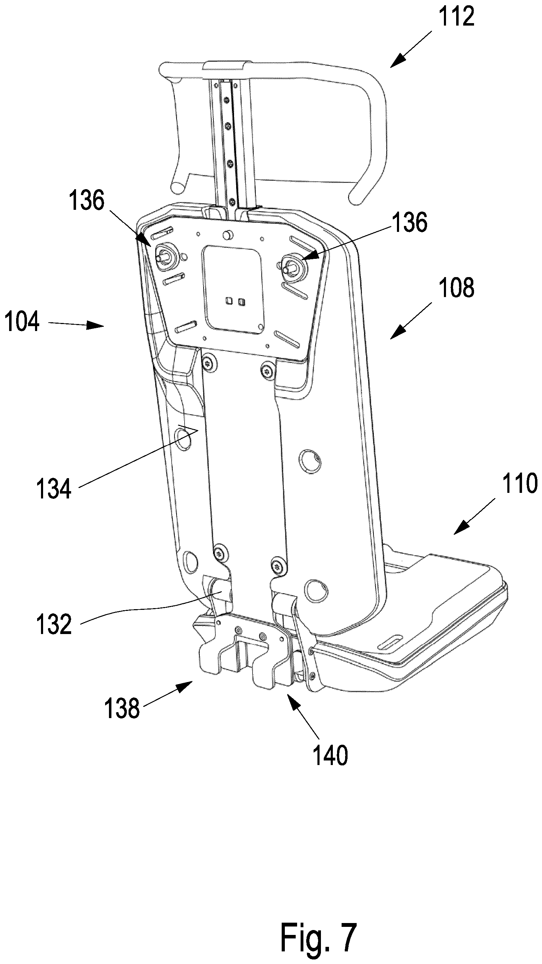

Bei einer weiteren in Fig. 7 schematisch dargestellten Ausführungsform eines Sitzelements sind ähnliche und identische Bauteile mit denselben Bezugszeichen gekennzeichnet.

Das Sitzelement 10 ist wiederum klappbar ausgebildet, wobei ein entsprechendes Klappen oder Verschwenken des Sitzteils 110 um eine in das Rückenteil 108 integrierte Schwenkachse 132 erfolgt.

Der wesentliche Unterschied des in Fig. 7 dargestellten Sitzelements besteht in der Art der Befestigung des Sitzelements in dem Lastenfahrradbehälter. Zur Befestigung sind an einer Rückseite 134 des Rückenteils 108 zwei obere Befestigungselemente 136 und ein unteres Befestigungselement 138 vorgesehen. Die beiden oberen Befestigungselemente 136 weisen Schrauben auf. Diese werden in horizontale Bohrungen eingesteckt, die an den Verbindungsbügeln 78 vorgesehen sind. Hierdurch ist eine feste Verbindung zwischen dem Sitzelement 104 und den Verbindungsbügeln 78 realisiert.

Das untere Befestigungselement ist hakenförmig ausgebildet und weist eine nach unten weisende Öffnung 140 auf. Mit Hilfe der Öffnung 140 ist es möglich, das untere Befestigungselement 138 von oben auf eine Verbindungsstrebe 80,82 aufzustecken. Über das untere Befestigungselement 138 werden somit in horizontaler Richtung wirkende Kräfte übertragen.

## Patentansprüche

1. Lastenfahrradbehälter mit
mindestens einem innerhalb des Lastenfahrrades angeordneten Sitzelement (104) und
einer Halteeinrichtung mit mindestens einem Halteelement (78,80,82) für das Sitzelement (104),
**dadurch gekennzeichnet, dass**
das Sitzelement (104) ein höhenverstellbares Kopfteil (112) aufweist.

2. Lastenfahrradbehälter nach Anspruch 1, **dadurch gekennzeichnet**, dassdie Halteeinrichtung mindestens ein Halteelement (78,80,82) zur insbesondere hohen Kraftaufnahme aufweist und das mindestens eine Halteelement (78,80,82) vorzugsweise Metall aufweist, insbesondere aus Metall hergestellt ist.

3. Lastenfahrradbehälter nach Anspruch 2, **dadurch gekennzeichnet, dass** das mindestens eine Halteelement (78,80,82) als Verbindungsbügel (78) ausgebildet ist, der vorzugsweise umlaufend ist.

4. Lastenfahrradbehälter nach Anspruch 3, **dadurch gekennzeichnet, dass** der Verbindungsbügel zwei Bügelelemente (78) aufweist, die insbesondere im Bereich einer Rückwand (56) und einer Vorderwand (58) miteinander verbunden sind.

5. Lastenfahrradbehälter nach Anspruch 3 oder 4, **dadurch gekennzeichnet, dass** der Verbindungsbügel (78) zusätzlich zur Verbindung von mehreren, insbesondere zwei den Lastenfahrradbehälter ausbildenden Kunststoffteilen vorgesehen ist.

6. Lastenfahrradbehälter nach einem der Ansprüche 1 bis 5, **dadurch gekennzeichnet, dass** das mindestens eine Halteelement (78,80,82) mindestens eine Verbindungsstrebe (80,82) aufweist, die vorzugsweise an einer Innenseite einer Rückwand (56) und/oder eine Verbindungsstrebe (80,82) an einer Innenseite der Vorderwand (58) angeordnet ist.

7. Lastenfahrradbehälter nach einem der Ansprüche 1 bis 6, **dadurch gekennzeichnet, dass** die Halteeinrichtung mehrere Halteelemente (78,80,82) aufweist, wobei ein Halteelement als Haltebügel (78) und zumindest ein weiteres Halteelement als Verbindungsstrebe (80,82) ausgebildet ist.

8. Lastenfahrradbehälter nach einem der Ansprüche 1 bis 7, **dadurch gekennzeichnet, dass** das Sitzelement (104) ein Sitzteil (110) und ein Rückenteil (108) aufweist.

9. Lastenfahrradbehälter nach Anspruch 8, **dadurch gekennzeichnet, dass** das Sitzteil (110) klappbar ist, wobei das Sitzteil (110) vorzugsweise klappbar an einer Verbindungsstrebe (80,82) befestigt ist.

10. Lastenfahrradbehälter nach einem der Ansprüche 1 bis 9, **dadurch gekennzeichnet, dass** mit dem Sitzelement (104), insbesondere mit dem Rückenteil (108) des Sitzelements (104), Befestigungselemente (136,138) zur Verbindung mit den Halteelementen (78,80,82) vorgesehen sind.

11. Lastenfahrradbehälter nach den Ansprüchen 8 bis 10, **dadurch gekennzeichnet, dass** das Rückenteil (108) insbesondere über die Fixierelemente (136,138) an den Verbindungsbügel (78) und/oder der Verbindungsstrebe (80,82) befestigt ist.

12. Lastenfahrradbehälter nach Anspruch 1 bis 11, **dadurch gekennzeichnet, dass** das Kopfteil (112) klappbar ist, wobei das Kopfteil (112) vorzugsweise klappbar an dem Verbindungsbügel (78) befestigt ist.

13. Lastenfahrradbehälter nach einem der Ansprüche 1 bis 12, **dadurch gekennzeichnet, dass** an einer Innenseite einer Rückwand (56) des Lastenfahrradbehälters zwei Sitzelemente (104) nebeneinander und/oder an einer Vorderwand (58) des Lastenfahrradbehälters ein Sitzelement (104) angeordnet ist.

14. Lastenfahrradbehälter nach einem der Ansprüche 1 bis 13, **dadurch gekennzeichnet, dass** der Lastenfahrradbehälter eine hohe Schulterlinie aufweist.

15. Lastenfahrradbehälter nach einem der Ansprüche 1 bis 14, **dadurch gekennzeichnet, dass** eine Oberseite einer Sitzfläche eines in dem Lastenfahrradbehälter angeordneten Sitzelements (104) und eine Oberkante der Seitenwand des Lastenfahrradbehälters einen Abstand von mindestens 30 cm, insbesondere mindestens 35 cm und besonders bevorzugt mindestens 40 cm aufweist, so dass insbesondere eine hohe Schulterlinie ausgebildet ist.
